# EUROPEAN PATENT SPECIFICATION

(11) **EP 1 274 992 B1**
(45) Date of publication and mention of the grant of the patent: **24.05.2006**
(21) Application number: 01920692.9
(22) Date of filing: 22.03.2001
(51) Int. Cl.: G01N 27/72, G01V 15/00, E21B 23/02, E21B 31/00, E21B 34/06, E21B 41/00, E21B 43/119, E21B 47/024, E21B 47/09, E21B 47/12, G01S 13/74

(54) **APPARATUS AND METHOD FOR DOWNHOLE WELL EQUIPMENT AND PROCESS MANAGEMENT, IDENTIFICATION, AND ACTUATION**
VORRICHTUNG UND VERFAHREN FÜR BOHRLOCHQUELLENGERÄTE UND PROZESSMANAGEMENT, IDENTIFIKATION UND BETÄTIGUNG
APPAREIL ET PROCEDE POUR EQUIPEMENT DE FOND DE PUITS ET GESTION DE PROCESSUS, IDENTIFICATION ET ACTIONNEMENT

(30) Priority: 28.03.2000 US 536953; 19.03.2001 US 812141
(43) Date of publication of application: 15.01.2003
(60) Divisional application: 05013187.9
(73) Proprietor: SCHLUMBERGER HOLDINGS LIMITED, Road Town, Tortola (VG); SCHLUMBERGER TECHNOLOGY B.V., 2514 JG Den Haag (NL)
(72) Inventor: THOMEER, Hubertus, V., Houston, TX 77055 (US); ADNAN, Sarmad, Sugar Land, Texas 77479 (US); SHEFFIELD, Randolph, J., Missouri City, TX 77459 (US); KENISON, Michael, H., Missouri City, TX 77459 (US); FORBES, Kevin, J., Houston, TX 77077 (US)
(74) Representative: Stoole, Brian David
(86) International application number: PCT/US2001/009336
(87) International publication number: WO 2001/073423

(56) References cited:
- EP-A1- 0 013 494
- EP-A2- 0 651 132
- EP-A2- 0 730 083
- EP-A2- 0 972 909
- EP-B1- 0 412 535
- WO-A-00/60780
- US-A- 4 023 167
- US-A- 4 572 293
- US-A- 4 630 044
- US-A- 4 656 463
- US-A- 4 827 395
- US-A- 5 279 366
- US-A- 5 361 838
- US-A- 5 457 447
- US-A- 5 495 237
- US-A- 5 497 140
- US-A- 5 626 192
- US-A- 5 680 459
- US-A- 5 682 143
- US-A- 5 720 345
- US-A- 5 995 449

## Description

### Technical Field of the Invention

This invention relates to the equipment and methods used in the drilling and completion of wells, such as oil and gas wells, and in the production of fluids from such wells.

### Background of the Invention

Hydrocarbon fluids such as oil and natural gas are obtained from a subterranean geologic formation (i.e., a "reservoir") by drilling a well that penetrates the hydrocarbon-bearing formation. Once a wellbore has been drilled, the well must be "completed" before hydrocarbons can be produced from the well. A completion involves the design, selection, and installation of tubulars, tools, and other equipment that are located in the wellbore for the purpose of conveying, pumping, or controlling the production or injection of fluids. After the well has been completed, production of oil and gas can begin.

Each of these phases (drilling, completion, and production) make use of a complex variety of equipment, including tubular members such as casing, production tubing, landing nipples, and gas lift mandrels; flow control devices such as gas lift valves, subsurface safety valves, and packers; and other equipment, such as perforation guns. In many situations it is necessary to lower one piece of equipment into the well so that it can be installed into a particular location in the wellbore (e.g., installing a gas lift valve in a particular gas lift mandrel when there may be several gas lift mandrels at different depths in the wellbore), or alternatively can perform a desired action at a desired location (e.g., a perforating gun that uses shaped charges to create holes in well casing at a particular depth in the well).

In the past, rather complex means have been used to determine when a given piece of downhole equipment is in the desired location in the wellbore. These methods have often been imprecise, complex, and expensive. For example, a wireline retrievable subsurface safety valve can be lowered into a wellbore on a wireline to be installed in a particular landing nipple. If multiple landing nipples are located in the wellbore, generally the uppermost one must have the largest inner diameter, and each succeeding lower nipple must have a smaller inner diameter, so that the valve may be placed at the desired depth in the well. This requires the use of multiple sizes (i.e., inner diameters) of landing nipples, as well as corresponding sizes of safety valves. Thus, while this technique for installing and/or activating downhole tools in a wellbore works, it can be complex and cumbersome in certain instances.

US 5,279,366 describes the use of both magnetic and radioactive location markers in a well casing. The detector device is capable of detecting both high energy radiation (gamma rays) and magnetic anomalies, thus making it easier to confirm that well depth logs using either system separately, are properly correlated.

WO 00/60780 describes the use of RF tags to identify depth in a wellbore. The tags are installed at each joint in the pipe or casing. A tool is lowered through the casing to receive the signals of the installed tags and to transmit the tag depth to surface.

There is a long-standing need for more intelligent and adaptable methods of drilling and completing wells and of producing fluids therefrom.

### Summary of the Invention

The present invention relates to a method for actuating or installing downhole equipment in a wellbore. This providing a first downhole structure that comprises an RF identification transmitter unit that stores an identification code and transmits an RF signal corresponding to the identification code, and a second downhole structure that comprises an RF receiver unit that can receive the signal transmitted by the identification transmitter unit, decode the signal to determine the identification code corresponding thereto, one of the first downhole structure and the second downhole structure being secured at a given location in a subterranean wellbore, and the other being moveable in the wellbore; and placing the first and second downhole structures in close enough proximity so that the RF receiver unit can receive the RF signal transmitted by the RF identification transmitter unit; the method being characterized by: comparing the identification code determined by the RF receiver unit to a target identification code; and, if the determined identification code matches the target identification code, actuating or installing one of the first downhole structure or second downhole structure in physical proximity to the other.

The present invention also relates to apparatus that can be used in the above-described method. Such apparatus is described in more detail below.

The present invention has several benefits over prior art apparatus and methods. It provides a way of selectively installing or actuating downhole equipment at a desired time and/or at a desired location, at lower cost and with greater flexibility than in prior art techniques.

Another benefit of the present invention lies in the reduction of downhole tool manipulation time. In some cases, considerable downhole manipulation is done to ensure that a tool is at the right point on the downhole jewelry or that the right action is performed. This time and effort can be eliminated or at least reduced by the present invention's ability to actuate or manipulate only when at the right point. A tool of the present invention can sense this based on the presence of the non-acoustic serial number information.

### Brief Description of the Drawings

Figure 1 is a side cross-sectional view of a tubing string comprising a landing nipple in accordance with the present invention.

Figure 2 is a side cross-sectional view of the non-acoustic frequency identification transmitter unit of Figure 1.

Figure 3 is a cross-sectional view of a downhole tool in place in a landing nipple in accordance with the present invention.

Figure 4 is a side cross-sectional view of a tubing string comprising a plurality of landing nipples in accordance with the present invention.

Figure 5 is a side cross-sectional view of a multilateral well having a plurality of lateral boreholes, and apparatus and accordance with the present invention.

Figure 6A is a cross-sectional view of a well containing apparatus, including a tubing string, in accordance with the present invention.

Figure 6B is a cross-sectional view of two connected joints of tubing, one of those joints comprising a transmitter in accordance with the present invention.

Figures 7A and 7B are cross-sectional views of a downhole tool in accordance with the invention in two different positions in a well, as a result of being raised or lowered on a wireline.

Figure 8 is a cross-sectional view of a downhole tool in accordance with the present invention locked in place in a landing nipple.

Figure 9A is a cross-sectional view of a downhole tool installed in a landing nipple in accordance with the present invention.

Figure 9B is a cross sectional view of the downhole tool of Figure 9A installed in a landing nipple having a different inner diameter than that of Figure 9A.

Figure 10 is a top cross-sectional view of a tubular member and downhole tool in accordance with the present invention.

Figure 11A is a cross-sectional view of a downhole tool that comprises a sliding sleeve, and a tubular housing member, in accordance with the present invention, with the sleeve in a first position.

Figure 11B is a cross-sectional view of a downhole tool that comprises a sliding sleeve, and a tubular housing member, in accordance with the present invention, with the sleeve in a second position.

Figure 12 is a cross-sectional view of a downhole tool having a fishing neck and a fishing tool in accordance with the present invention.

Fig. 13 is a schematic of a transmitter of the present invention installed in a Y-Block.

Figure 14A is a schematic of a perforating gun lowered into proximity of a transmitter unit by a supporting structure.

Figure 14B is a schematic of a perforating gun lowered into proximity of a transmitter unit by free fall.

Figure 15 is a schematic of the present invention used to provide downhole tool-to-surface telemetry.

### Detailed Description of Preferred Embodiments

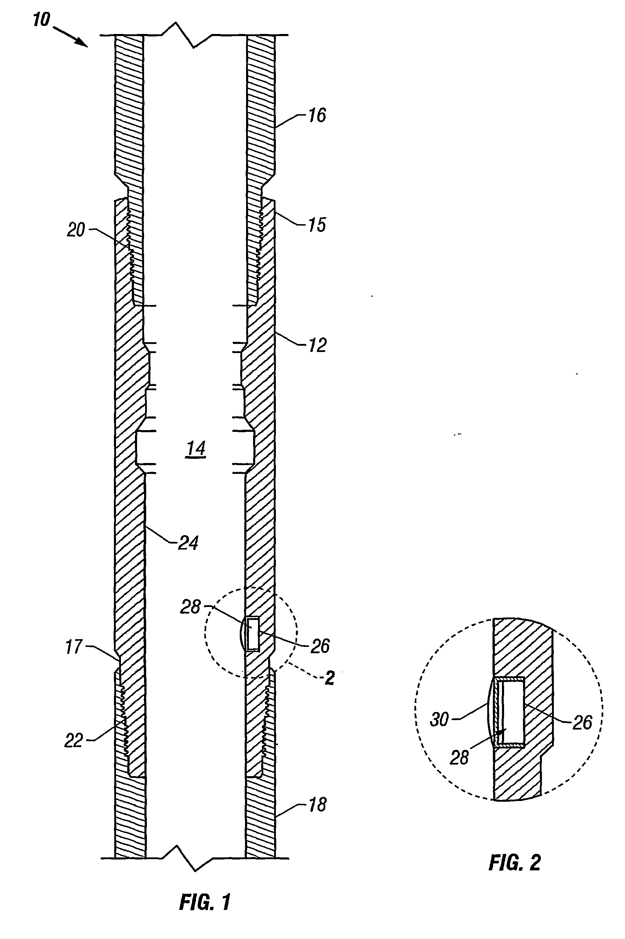

The present invention makes use of non-acoustic transmission, such as radio frequency transmission, optical transmission, tactile transmission, or magnetic transmission of at least one identification code to locate, install, actuate, and/or manage downhole equipment in a subterranean wellbore. Figure 1 shows one embodiment of the invention. A segment of a tubing string 10 includes a first downhole structure 12, which in this embodiment is a landing nipple that has a hollow axial bore 14 therethrough. The landing nipple 12 is attached at its upper end 15 to an upper tubular member 16, and at its lower end 17 to a lower tubular member 18, by threaded connections 20 and 22. The landing nipple 12 has an inner diameter 24 that is defined by the inner surface of the nipple wall. A recess 26 is formed in the inner surface of the nipple wall, and a non-acoustic transmitter unit, in this case a radio frequency identification transmitter unit 28, is secured therein. The non-acoustic frequency identification transmitter unit 28, which is shown in more detail in Figure 2, stores an identification code and transmits a radio frequency signal corresponding to the identification code. The landing nipple 12 can be made of any material suitable for downhole use in a well, such as steel. A cap 30, which for example can comprise steel or a ceramic or composite material such as resin coated fibers can overlay the frequency identification transmitter unit 28 and preferably physically seal it from contact with well fluids. However, it should be understood that absence of contact between well fluids and the frequency identification transmitter unit is not critical to the invention. The cap 30 is not essential.

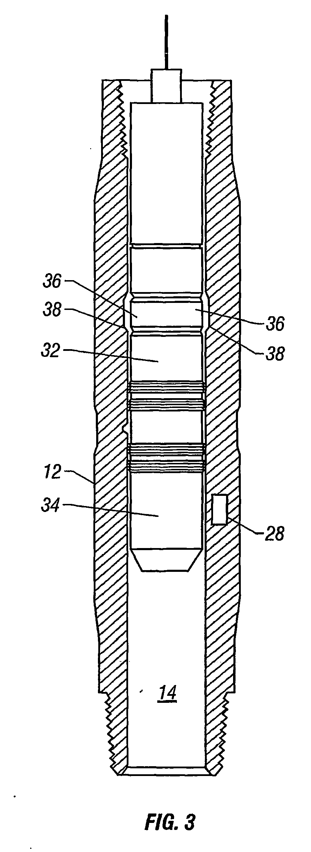

Figure 3 shows a second downhole structure 32, in particular a wireline lock, which is adapted to work in conjunction with the landing nipple 12 of Figure 1. This second downhole structure comprises a non-acoustic frequency receiver unit 34, in this case a radio frequency receiver unit, that receives frequency signals, such as the one transmitted by the frequency identification transmitter unit 28. The receiver unit decodes the non-acoustic frequency signal to determine the identification code corresponding thereto, and compares the identification code to a preset target identification code.

As shown in Figure 3, when the second downhole structure 32 is placed in close enough proximity to the first downhole structure 12 in the wellbore, the non-acoustic frequency receiver unit 34 receives the non-acoustic frequency signal transmitted by the identification transmitter unit 28, decodes that signal to determine the identification code, and compares the determined identification code to the target code. If the determined identification code matches the target identification code, the first downhole structure is actuated or installed in the desired physical proximity to the second downhole structure (or vice versa). In particular, locking tabs 36 are extended outwardly into corresponding locking recesses 38 in the inner diameter of the second downhole structure.

Figures 1, 2, and 3 show the first downhole structure (e.g., the landing nipple 12) as being secured at a given location in a subterranean wellbore, by connection to a tubing string. In those figures, the second downhole structure (e.g., a tool such as a lock with flow control device or a depth locator) is moveable along the axial bore of the well. However, it should be appreciated that this is only one embodiment of the invention. It would also be possible to have the first downhole structure (with the frequency identification transmitter unit therein) moveable relative to the wellbore, and the second downhole structure (with the frequency receiver unit therein) secured at a fixed position in the wellbore. Further, it is possible to have both the first downhole structure and the second downhole structure moveable.

In the previous and following examples and embodiments of the present invention, the first and second downhole structures are described as having either transmitter units or receiver units. Such description is intended for discussion purposes and not intended to limit the scope of the present invention. It should be appreciated that, depending upon the application, the first and second downhole structures can have both transmitter units and receiver units and remain within the purview of the present invention.

Suitable non-acoustic frequency identification transmitter units are commercially available. Suitable examples of radio frequency transmitter units include the Tiris transponders, available from Texas Instruments. These radio frequency identification transmitter units are available in hermetically sealed glass capsules having dimensions of approximately 31 x 4 mm, emit a radio frequency signal at about 134.2 kHz that can be read up to about 100 cm away, and can comprise a 64 bit memory. Of course, this is only one possible embodiment, and larger or smaller memories can be used, as well as other frequencies, sizes, package configurations, and the like. Suitable non-acoustic frequency receiver units are also commercially available, such as the Tiris radio frequency readers and antennas from Texas Instruments.

Tiris transponders, available from Texas Instruments, are adapted to store a multi-bit code, for example, a digital code of 64 bits. The transponder itself will typically include a coil, a chip storing the multi-bit code, and associated circuitry. The transponders are generally of three types. The first type is preprogrammed by the manufacturer with a preselected multi-bit code. A second type would be sold by the manufacturer in an unprogrammed state, and the end user may program the multi-bit code permanently into the transponder. A third type may be programmed initially and then reprogrammed many times thereafter with different multi-bit codes. In the presently preferred embodiment, the transponder is programmed one time permanently, either by the manufacturer or by the end user. The multi-bit code in such a device may not be changed for the life of the transponder. In another embodiment of the present invention, a reprogrammable transponder may be used to advantage. For example, after the transponder is placed downhole, its multi-bit code may be updated to reflect certain information. For example, a transponder associated with a downhole valve may have its multi-bit code updated each time the valve is actuated to reflect the number of times the valve has been actuated. Or, by way of further example, the multi-bit code may be updated to reflect the status of the valve as being in an open or closed position.

Tiris radio frequency readers and antennae, also available from Texas Instruments, may be used to read the multi-bit code stored in a Tiris transponder. The reader/antenna is typically powered by battery, although it may be powered by way of a permanent power source through a hardwire connection. The reader/antenna generates a radio signal of a certain frequency, the frequency being tuned to match the coil in the transponder. The radio signal is transmitted from the reader/antenna to the transponder where power from the signal is inducted into the coil of the transponder. Power is stored in the coil and is used to generate and transmit a signal from the transponder to the reader/antenna. Power is stored in the coil of the transponder for a very short period of time, and the reader/antenna must be prepared to receive a return signal from the transponder very quickly after first transmitting its read signal to the transponder. Using the power stored in the coil, the transponder generates a signal representative of the multi-bit code stored in the transponder and transmits this signal to the reader/antenna. The reader/antenna receives the signal from the transponder and processes it for digital decoding. The signal, or its decoded counterpart, may then be transmitted from the reader antenna to any selected data processing equipment.

In an alternative embodiment of the present invention, as mentioned just above, the multi-bit code stored in a transponder may be updated and rewritten while the transponder is downhole. For example, a reader/antenna unit may be used to read the multi-bit code from a transponder downhole and, if desired, the code stored in the transponder may then be updated by way of a write signal to the reprogrammable transponder.

In many embodiments of the invention, the first downhole structure will comprise a tubular member having a hollow axial bore. The non-acoustic frequency identification transmitter unit preferably is secured to this tubular member, for example in a recess in the wall of the tubular member, as shown in Figure 1. The frequency identification transmitter unit preferably is imbedded in the tubular member (i.e., sunk into a space in the member, so that the surface of the tubular member is not substantially affected, as opposed to attaching the unit to an exterior surface of the tubular member whereby it would create a substantial protrusion on that surface). Suitable examples of such tubular members include landing nipples, gas lift mandrels, packers, casing, external casing packers, slotted liners, slips, sleeves, guns, and multilaterals.

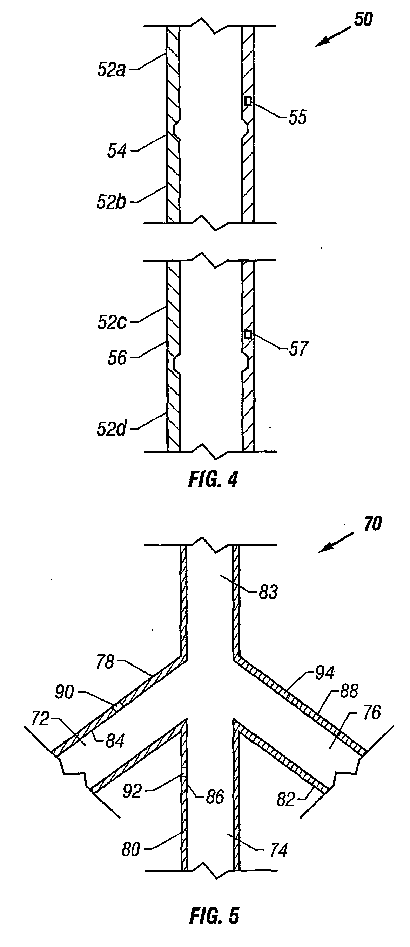

In one preferred embodiment of the invention, two or more first downhole structures are secured at different depths in a subterranean wellbore. As shown in Figure 4, a tubing string 50 can include joints of production tubing 52a, 52b, 52c, and 52d. Attached to these joints of tubing are a first landing nipple 54 and a second landing nipple 56, with frequency identification transmitter units 55 and 57 secured thereto. When a second downhole structure (e.g., a wireline retrievable subsurface safety valve) is lowered through the tubing string, it will detect and determine the identification code of each nipple 54 and 56. If it detects an identification code that does not match its target code, it will not actuate, and thus can continue to be lowered in the bore. When it detects an identification code that does match its target code, it will actuate, thus allowing the safety valve to be selectively installed/actuated at a desired located in the wellbore.

Another embodiment of the invention, shown in Figure 5, is particularly useful in a multilateral well 70 that has a plurality of lateral bores 72, 74, and 76. Each of these lateral bores is defined by a lateral tubing string 78, 80, and 82 branching off from a main borehole 83. Each of these tubing strings comprises at least one first downhole structure (e.g., landing nipples 84, 86, and 88, each having radio frequency identification transmitter units 90, 92, and 94 secured therein) secured in a fixed, given location in the respective lateral borehole. When the second downhole structure (e.g., a wireline retrievable subsurface safety valve) is lowered down through the tubing string and into one of the laterals, the radio frequency receiver unit therein will detect the radio frequency signal emitted by the transmitter in any nipple within range, and will thus determine the identification code of each such nipple as is passes close to the nipple. By providing the transmitter units in the different lateral boreholes with different ID codes, this embodiment allows a determination of which lateral borehole the valve has entered.

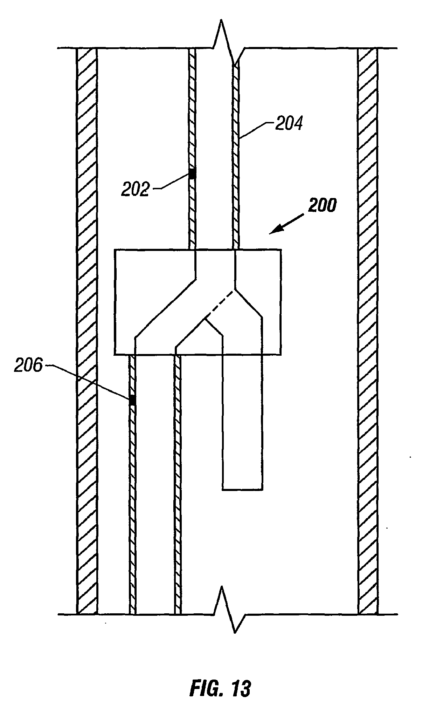

Another embodiment, shown in Fig. 13, is particularly useful when an electrical submersible pump (ESP) is integrated into the tubing string in a Y-Block configuration, indicated generally as 200. At least one identification transmitter unit 202 is located above the Y-Block such that as a second downhole structure (i.e., tool, pipe, coil, wireline, slickline, etc.) is lowered through the tubing string 204, it detects and determines the identification code of the transmitter unit 202. Based on the determination of the identification code, the second downhole structure can automatically adjust to avoid an inadvertent entry into the branch containing the ESP. A second transmitter unit 206 can be provided below the Y-Block to serve as a positive indication that the second downhole structure has entered the correct branch.

As mentioned above, suitable second downhole structures can be, for example, subsurface safety valves, as well as gas lift valves, packers, perforating guns, expandable tubing, expandable screens, flow control devices, and other downhole tools. Other second downhole structures can include, among others, perforations, fractures, and shut-off zones, in which the transmitter is placed during well stimulation (such as fracturing) or well intervention (such as perforation) operations.

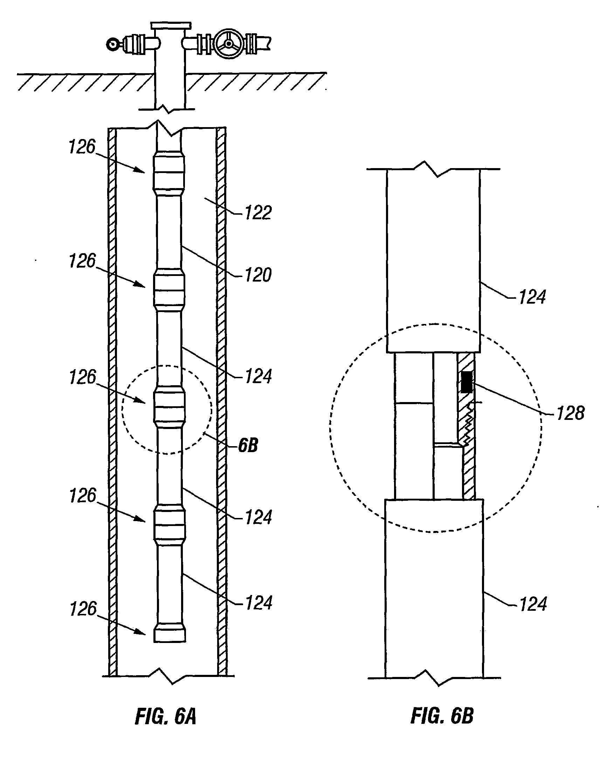

Another use for the present invention involves determining the depth at which a downhole tool is located. In this embodiment, a tubing string will include two or more first downhole structures that are located at different depths in a wellbore. These first downhole structure could suitably be landing nipples, or they could simply be tubing joints having a transmitter unit mounted thereon or embedded therein. As shown in Figure 6A, a tubing string 120 in a well 122 comprises a plurality of joints 124 of tubing, each connected to the next end-to-end by a threaded connection. At one end 126 of each joint (or at least in the ends of a plurality of joints), a radio frequency identification transmitter unit (not visible in Figure 6A) is embedded in the wall of the tubing. Figure 6B shows the placement of the transmitter unit 128 in the wall of a tubing joint 124. Therefore, the known length of each tubing joint and the transmitter unit at the end of each joint, with a unique identification code, permits relatively precise assessment of the depth at which the secondary structure is located. Thus, the identification codes of the various first downhole structures in effect correlate to the depth at which each is installed, and the ID codes detected by the second downhole structure as it is lowered through the borehole will provide an indication of the depth of the second downhole structure.

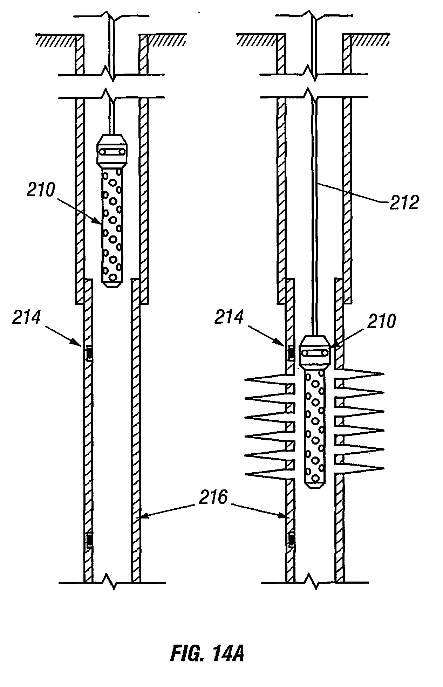

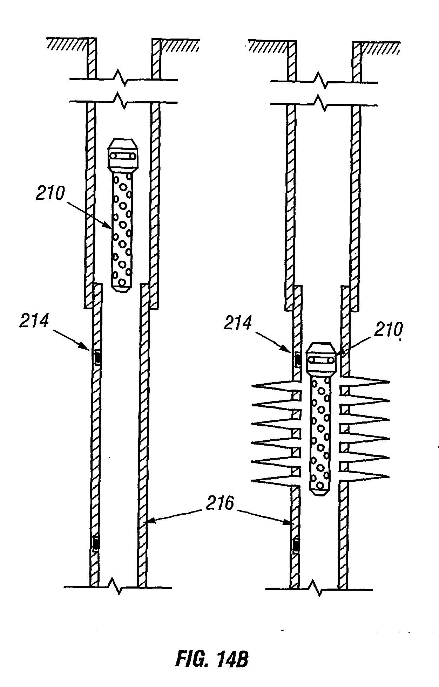

A similar use of the present invention determines depth as described in the previous paragraph as a way of determining when a perforating gun (as the second downhole structure) is at the desired depth at which it should be fired to perforate tubing and/or casing. As shown in Fig. 14A, the perforating gun 210 is lowered with a supporting structure 212 until the desired transmitter unit 214 in the first downhole structure 216 is reached. Alternatively, as shown in Fig. 14B, the perforating gun 210 is dropped without use of a supporting structure, such that it free falls and fires automatically when it reaches the desired transmitter unit 214 in the first downhole structure.

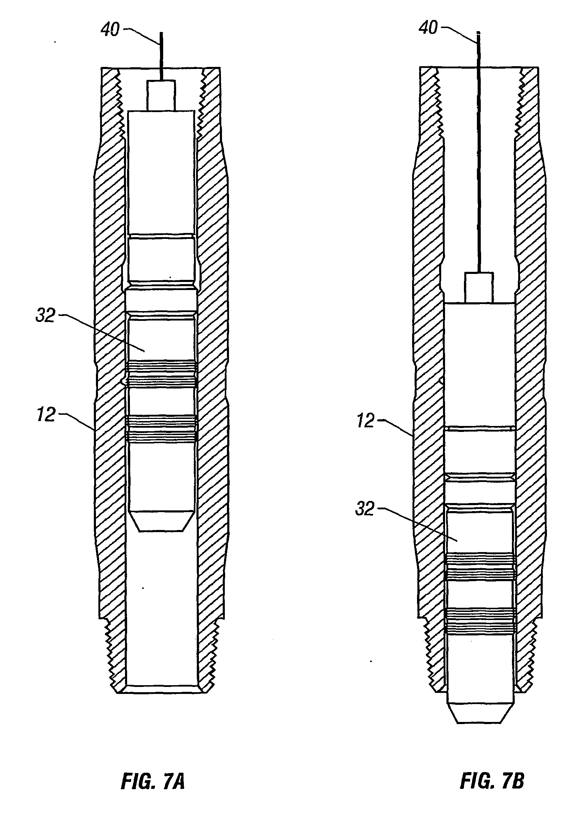

As mentioned above, the second downhole structure can be a downhole tool that is adapted to be raised or lowered in a wellbore. In order to do this, the downhole tool preferably is attached to a supporting structure 40, such as wireline, slickline, coiled tubing, and drillpipe. As shown in Figures 7A and 7B, the second downhole structure 32 can be moved to different depths within the borehole by raising or lowering this supporting structure 40.

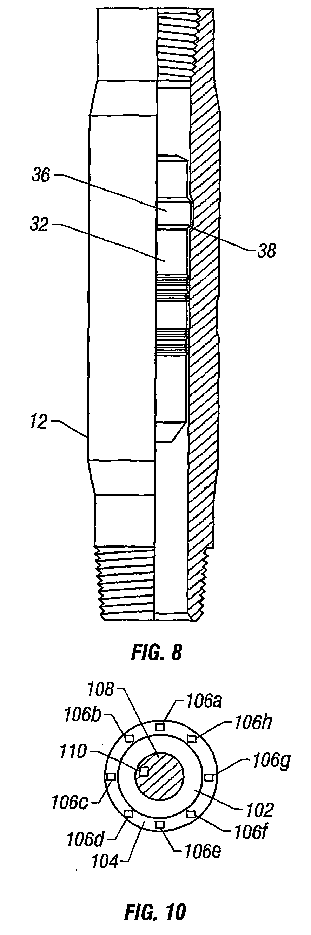

One common type of actuation of a downhole tool that can occur in response to a match between the determined ID code and the target ID code comprises locking the second downhole structure in a fixed position relative to the first downhole structure. For example, locking protrusions 36 on the tool 32 can move outward into locking engagement with locking recesses 38 on the inner diameter of a landing nipple 12, as shown in Figure 8.

In one embodiment of the invention, the identification code indicates at least the inner diameter of the tubular member, and the target identification code is predetermined to match the identification code of the desired size (e.g., inner diameter) tubular member in which the downhole becomes locked upon actuation. Thus, when the receiver unit in the second downhole structure determines that the ID code (and thus the inner diameter of the first downhole structure) matches the outer diameter of the locking means on the second downhole structure, the tool can actuate, thereby providing locking engagement of the tool and nipple. Similarly, the tool can actuate and provide unlocking engagement of the tool and nipple.

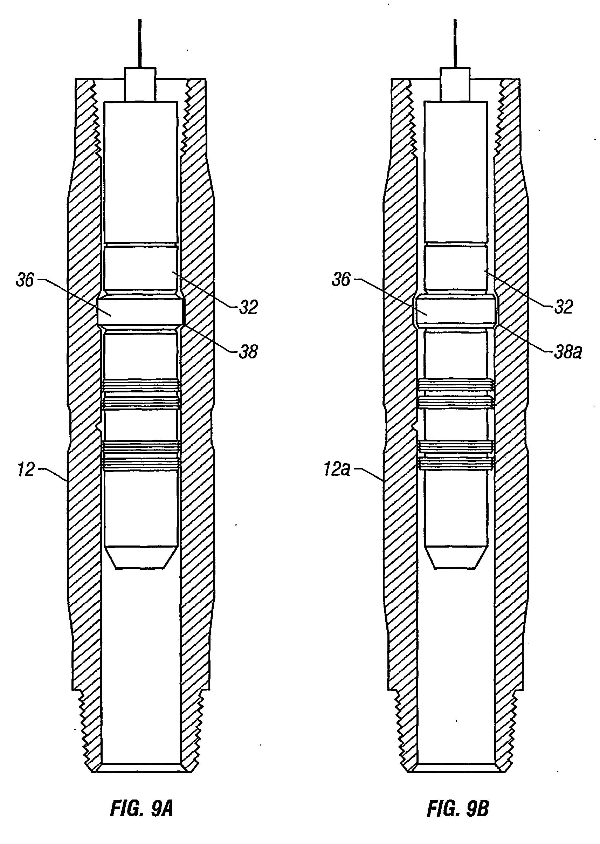

Another variation on this embodiment of the invention involves the use of a downhole tool that can adjust in size to fit the inner diameter of the tubular members having various inner diameters. In other words, this tool can morph in size to engage landing nipples of various sizes, as shown in Figures 9A and 9B. Figure 9A shows a second downhole structure (i.e., downhole tool 32) locked in place in a landing nipple 12 by locking protrusions 36 that engage locking recesses 38. As shown in Figure 9B, when this same downhole tool 32 is placed in the bore of a landing nipple 12a that has a larger inner diameter, the locking protrusions can be extended outwardly a greater distance to engage locking recesses 38a on the landing nipple 12a and thereby secure the tool 12a in a fixed position in the well. This further extension is actuated by the receiver unit in the second downhole structure determining the ID code (and thus the inner diameter of the first downhole structure) and the need for further extension of the locking protrusions 36. This allows the use of more standard equipment, and lessens the need to maintain an inventory of many different sizes and/or configurations of downhole equipment.

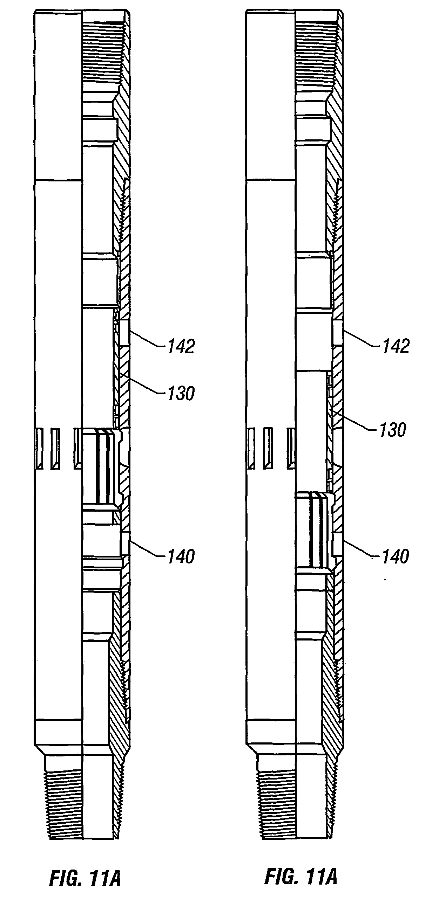

Yet another embodiment of the present invention is shown in Figure 10. As in several of the previously described embodiments, the first downhole structure comprises a tubular member 100 having an axial bore 102 therethrough. The bore is defined by the inner surface of the tubular member, which has a generally circular inner diameter 104. The tubular comprises a plurality of radio frequency identification transmitter units 106a, 106b, 106c, 106d, 106e, 106f, 106g, and 106h spaced about its inner diameter, preferably in a single cross-sectional plane. As described above, each non-acoustic frequency identification transmitter transmits a non-acoustic frequency signal (e.g., a radio frequency signal) corresponding to a different identification code. When a second downhole structure, such as a downhole tool 108, is lowered into the bore 102 of the tubular member 100, the frequency receiver unit 110 located in or on the tool determines the identification code of the transmitter unit 106 that is closest to it, and thereby determines the orientation of the first downhole structure relative to second downhole structure in the wellbore.

Another embodiment of the invention is especially well suited for use with subsurface safety valves or other downhole equipment that comprises sliding sleeves, valve closure members, or other movable structures. In this embodiment, as shown in Figures 11A and 11B, the first downhole structure comprises a movable sleeve 130 or valve closure member which has a first position and a second position (e.g., open and closed positions shown in Figures 11A and 11B, respectively). The movable sleeve 130 exposes a first non-acoustic frequency identification transmitter unit 140 and occludes a second non-acoustic frequency identification transmitter unit 142 when the movable sleeve or valve closure member is in the first position (see Figure 11A). The movable sleeve 130 occludes the first transmitter unit 140 and exposes the second transmitter unit 142 when the movable sleeve is in the second position (see Figure 11B). A shifting tool can be used to move the movable sleeve 130 from the first position (see Figure 11A) to the second position (see Figure 11B). Similarly the movable sleeve 130 can be moved from the second position (see Figure 11B) to the first position (see Figure 11A). The first transmitter unit transmits a frequency signal corresponding to an identification code that is different than the signal and code for the second transmitter unit. Thus, the determined identification code can be used to determine whether a valve closure member is in the open or closed position, or to determine whether a movable sleeve is in the up or down position. This embodiment of the invention can provide a positive indication that actuation (e.g., of a subsurface safety valve) has occurred, and can guarantee that the valve is open or closed. Failsafe indications such as make before break or break before make as appropriate can be used to guarantee the correctness of this verification and indication information.

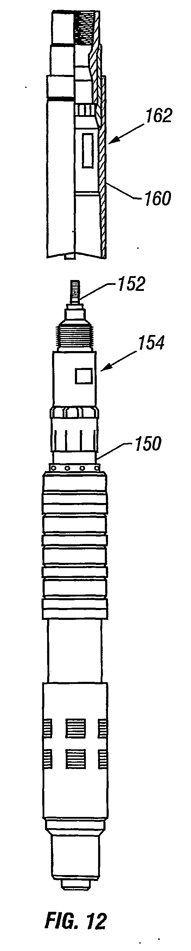

Another embodiment of the invention is especially useful when fishing for tools or parts thereof that have become detached from supporting structure in the borehole. In this embodiment, as shown in Figure 12, the first downhole structure is a downhole tool 150 that comprises a fishing neck 152, and the non-acoustic frequency identification transmitter unit 154 is secured to the fishing neck. The second downhole structure is a fishing tool 160 having secured to it the non-acoustic frequency receiver unit 162. The identification code determined by the receiver unit can be used to determine when the fishing tool is in close enough physical proximity to the fishing neck, and thus can be used to actuate the fishing tool when it is in a suitable position for engaging the fish.

Another embodiment of the invention makes use of a detachable, autonomous tool that can be released from the end of a supporting structure (e.g., coiled tubing, wireline, or completion hardware) while downhole or uphole, to then do some desired operation in another part of the well (e.g., spaced horizontally and/or or vertically from the point at which the tool separates from the supporting structure). The tool can later seek the end of the supporting structure, for example to enable it to be reattached, by homing in on the signal response from a transmitter unit embedded in the end of the supporting structure. Also, the tool can act as a repeater, actuator, or information relay device.

Another embodiment of the invention makes use of multiple autonomous agents optimized for submersible operation in different density fluids. The agents may be autonomous tools, transmitters, or receivers. The first agent can transfer a signal command from its location of origin to the boundary of the first fluid to a second fluid. The second agent can receive the signal command in the second fluid and respond to the signal command (for example by retrieving information or executing the command). In addition, the second agent can transfer a signal back to the first agent. This relay of signal commands or information between autonomous agents optimized for submersible operation in different density fluids can use multiple autonomous agents and perform across multiple fluid interfaces. This relay of signal commands or information between autonomous agents can extend up or down-hole, between horizontal and vertical wellbores, and between multilateral wellbores and the main wellbore.

Another embodiment of the present invention uses the non-acoustic transmitter units to relay information from a downhole tool to a surface operator. In this embodiment, the downhole tool has monitors and records data such as temperature, pressure, time, or depth, for example. The tool can also record data describing the position or orientation of a piece of equipment, such as whether a sliding sleeve is open or closed. Further, the tool can record data such as whether downhole tools and equipment have been installed or actuated. The non-acoustic transmitter units can be dedicated to relaying a certain type of information or can be used to relay multiple data types. This enables the correlation of data such as the temperature and pressure at the time of detonation.

Once the desired information is acquired by the tool, a microprocessor on the tool determines what information should be sent to the surface. The pertinent information is then written to a read/write non-acoustic transmitter unit that is stored in the tool. The transmitter units can be stored in the tool in a variety of ways. For instance, the transmitter units can be installed into a spring-loaded column, much like the ammunition clip in a handgun. Alternatively, the transmitter units can be stored around the perimeter of a revolving chamber. The manner in which the transmitter units are stored in the tool is not important, as long as the required number of tags are available for use and can be released to the surface.

After the pertinent information is written to a transmitter unit, the transmitter unit is released from the tool. It should be noted that the transmitter unit can be released either inside or outside of the tool depending upon the tool and the method of deployment. In one embodiment, when the transmitter unit is released, it is picked up by circulating fluid and carried to the surface. The transmitter unit is interrogated by a data acquisition device at the surface, at which time the information stored on the transmitter unit is downloaded. The microprocessor on the tool repeats the process with the additional transmitter units as directed by its programming.

In addition to tool-to-surface telemetry, as just described above, the non-acoustic transmitter units of the present invention can be used to send information from an operator at the surface to a tool located in the well. In this case, the transmitter unit is written to and released from the surface, circulated to the tool below, and returned to the surface. Once acquired by the tool, the information stored on the transmitter unit is downloaded for use by the microprocessor.

Depending on the programming of the tool microprocessor, a wide variety of instructions can be relayed from surface and carried out by the tool. Examples of possible instructions include how much to open a valve and whether or not to enter a multi-lateral, for example.

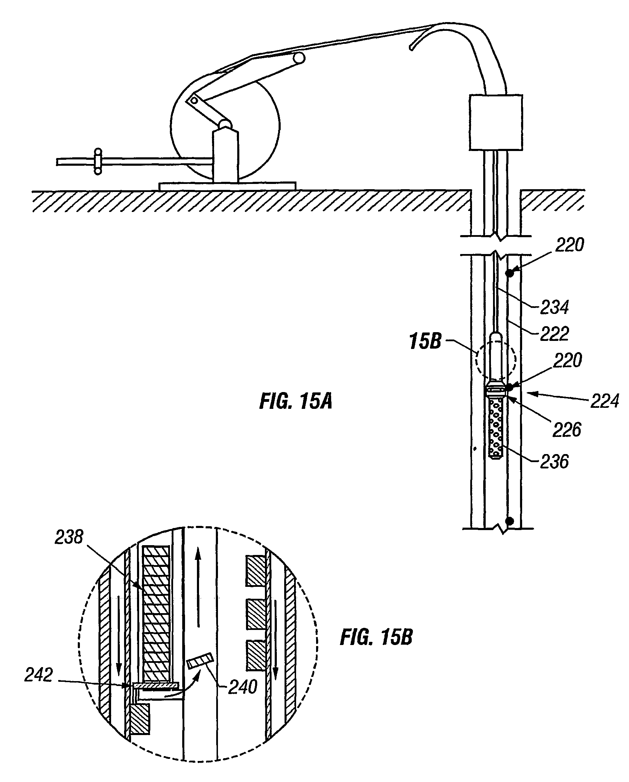

The following example is illustrative of both tool-to-surface and surface-to-tool telemetry using the non-acoustic transmitter units of the present invention to perform coiled tubing perforating. It should be noted that the example is equally applicable to other coiled tubing applications as well as applications using other conveyance systems (e.g., slickline, wireline, completion tools, drill strings, tool strings, etc.). As shown in Figure 15, a plurality of passive transmitter units **220** are located in collars along the production string **222.** A downhole tool **224** having a non-acoustic receiver unit **226,** a temperature gauge **228,** a pressure gauge **230,** and a tool clock **232** is attached to the coiled tubing **234** and carries the perforating gun **236.** The downhole tool **224** also has a spring-loaded column **238** of passive read/write transmitter units **240.** A separate antenna **242** is used to write information to the transmitter units **240.**

As the tool **224** is being lowered into the well via the coiled tubing **234,** fluid is pumped into the annulus between the production string **222** and the coiled tubing **234,** through the tool **224,** and up the coiled tubing **234.**

When the tool **234** passes by a collar with a transmitter unit **220,** the identification number of the transmitter unit **220** in the collar is read and decoded by a -microprocessor in the tool **224.** The antenna **242** then writes the identification number to the bottom-most transmitter unit **240** in the spring-loaded column **238.** Also written to the same transmitter unit **240** is the instantaneous measurements of temperature and pressure, as well as the current time, which is synchronized with a surface clock.

Once all the information is written to the spring-loaded transmitter unit **240,** the transmitter unit **240** is released into the inner diameter of the coiled tubing **234,** and another read/write transmitter unit **240** is pushed into position by the spring. The overall transmitter unit density approximates that of the fluid density, so the released transmitter unit **240** flows up the inner diameter of the coiled tubing **234** with the fluid. When the transmitter unit **240** reaches surface, the data is collected and the process is repeated for each collar having transmitter units **226,** making possible readings such as pressure versus well depth, temperature versus well depth, and coiled tubing depth versus well depth, for example.

To provide communication back downhole, once the information is received and analyzed by the operator, a transmitter unit **240** at the surface can be loaded with instructions on where (e.g. relative to a particular collar) and when (e.g. specific time delay) to fire the perforating gun **236.** The transmitter unit **240** can then be circulated in the fluid down to the tool **224,** and the instructions carried out by the microprocessor in the tool. After perforation takes place, critical information, such as temperature and pressure, can again be relayed to the surface by transmitter units **240** released from the tool **224.**

In another embodiment, the non-acoustic transmitter units of the present invention can be used autonomously without the necessity of a downhole tool. For example, the pumping fluid can be used to carry the transmitter units downhole and back to the surface through circulation. The individual transmitter units can receive and store data from transmitter units located downhole in tools, pipe casing, downhole equipment, etc. Once returned to the surface, the transmitter units can be analyzed to determine various operating conditions downhole. Such use provides continuous monitoring of wellbore conditions.

In another embodiment, the non-acoustic transmitter units of the present invention are used to autonomously actuate or install downhole tools and equipment. In this embodiment, non-acoustic transmitter units are dropped down the wellbore affixed to a drop ball, for example. As the non-acoustic transmitter units fall into proximity of non-acoustic receiver units located on the downhole tools and equipment, if the transmitted signal matches a predetermined identification code, the downhole tools and equipment are installed or actuated. It should be understood that both receiver units and transmitter units can be used to advantage being dropped down the wellbore. For example, a receiver unit affixed to a drop ball can carry information gathered from passing a transmitter unit affixed to the wellbore, tools, equipment, etc. and relay that information to a receiver unit located further downhole.

In yet another embodiment of the present invention, the non-acoustic transmitter units can be placed along the wellbore and correlated with formation or well parameters or completion characteristics at those locations. When the well is logged; a digital signature for the wellbore can be created to pinpoint depth in the wellbore.

In summary, the present invention provides apparatus and methods for managing, classifying, identifying, controlling, maintaining, actuating, activating, deactivating, locating, and communicating with downhole tools, jewelry, nipples, valves, gas-lift mandrels, packers, slips, sleeves and guns. The invention allows downhole tools to actuate only at the correct time and location and/or in the correct manner.

Although the present invention could be highly useful in any context, its benefits could be enhanced by a central organization that issues non-acoustic frequency identification units (encoding equipment serial numbers) to manufacturers of downhole components. This organization could also maintain a database of downhole tool identification codes/serial numbers of all components manufactured. Such a list of serial numbers could be classified or partitioned to allow for easy identification of the type and rating of any particular downhole component. Non-acoustic frequency transmitter units can store and transmit a signal corresponding to very large serial number strings that are capable of accommodating all necessary classes and ratings of equipment.

Other suitable uses of the invention include packer landing verification.

The preceding description of specific embodiments of the present invention is not intended to be a complete list of every possible embodiment of the invention. Persons skilled in this field will recognize that modifications can be made to the specific embodiments described here that would be within the scope of the present invention.

## Claims

1. A method for actuating or installing downhole equipment in a wellbore, the method comprising the steps of:
providing a first downhole structure (12) that comprises an RF identification transmitter unit (28) that stores an identification code and transmits an RF signal corresponding to the identification code, and a second downhole structure (32) that comprises an RF receiver unit (34) that can receive the signal transmitted by the identification transmitter unit, decode the signal to determine the identification code corresponding thereto, one of the first downhole structure (12) and the second downhole structure (32) being secured at a given location in a subterranean wellbore, and the other being moveable in the wellbore; and
placing the first and second downhole structures (12, 32) in close enough proximity so that the RF receiver unit (34) can receive the RF signal transmitted by the RF identification transmitter unit (28); the method being **characterized by**:
comparing the identification code determined by the RF receiver unit (34) to a target identification code; and
if the determined identification code matches the target identification code, actuating or installing one of the first downhole structure (12) or second downhole structure (32) in physical proximity to the other.

2. The method of claim 1, wherein the first downhole structure (12) comprises a tubular member having a hollow axial bore (14) therethrough and the RF identification transmitter unit (28) secured thereto.

3. The method of claim 2, wherein the identification transmitter unit (28) is imbedded in the tubular member (14).

4. The method of claim 1, wherein the first downhole structure (12) is selected from the group consisting of landing nipples, gas lift mandrels, packers, casing, external casing packers, slotted liners, multi- laterals, slips, sleeves, and guns.

5. The method of claim 1, wherein a plurality of first downhole structures (54, 56) are secured at different depths in a subterranean wellbore.

6. The method of claim 1, wherein at least one first downhole structure (eg 84) is secured in a given location in a lateral borehole (eg 72) of a multilateral well and the second downhole structure is placed in proximity to the first downhole structure within the same lateral.

7. The method of claim 1, wherein at least one first downhole structure (eg 84) is secured in a given location in a first lateral borehole (eg 72) of a multilateral well, and at least one other first downhole structure (eg 86) is secured in a location in a second lateral borehole (eg 74) of the well.

8. The method of claim 7, wherein each of the first downhole structures (84, 86, 88) comprises a tubular member having a hollow axial bore therethrough, and the identification transmitter unit (90, 92, 94) is secured to the tubular member.

9. The method of claim 8, wherein the identification code of each first downhole structure (84, 86, 88) is used to determine in which lateral borehole in the multilateral well the second downhole structure is located.

10. The method of claim 1, wherein the second downhole structure is selected from the group consisting of subsurface safety valves, gas lift valves, packers, perforating guns, expandable tubing, expandable screens, and flow control devices.

11. The method of claim 1, wherein a plurality of first downhole structures (124) are located at different depths in a wellbore, each of the first downhole structures comprises a tubular member having a hollow axial bore therethrough and the RF identification transmitter unit (128) secured thereto, and the determined identification code is used to determine the depth of the second downhole structure in the borehole.

12. The method of claim 11, wherein the plurality of tubular members(124) are joints of completion tubing that are attached end to end.

13. The method of claim 12, wherein each identification transmitter (128) is secured near one end of the respective joint of completion tubing.

14. The method of claim 11, wherein second downhole structure is a perforating gun (210), and the determined depth is used to determine when to fire the gun.

15. The method of claim 1, wherein a plurality of second downhole structures are located in a wellbore, each of the second downhole structures comprises a perforation and the RF identification transmitter unit is secured thereto.

16. The method of claim 1, wherein the second downhole structure comprises a perforation in a wellbore and the RF identification transmitter unit is secured therein.

17. The method of claim 1, wherein a plurality of second downhole structures are located in a formation, each of the second downhole structures comprises a fracture and the RF identification transmitter is present therein.

18. The method of claim 1, wherein the second downhole structure (32) is a downhole tool that is attached to a supporting structure (40) selected from the group consisting of wireline, stickline, coiled tubing, and drillpipe, and the second downhole structure is moved to different depths within the borehole by raising or lowering the supporting structure.

19. The method of claim 1, wherein the RF identification transmitter unit (28) comprises a radio frequency transponder.

20. The method of claim 1, wherein the second downhole structure (32) is a downhole tool that is actuated in response to a match between the determined identification code and the target identification code, and wherein the actuation comprises locking the second downhole structure (32) in a fixed position relative to the first downhole structure (12).

21. The method of claim 20, wherein the first downhole structure (12) comprises a tubular member having an axial bore (14) therethrough and an inner surface, and further comprising a locking indentation (38) in the inner surface, and wherein the second downhole structure engages the locking indentation when it is actuated.

22. The method of claim 21, wherein the identification code indicates the inner diameter of the tubular member (12), and the target identification code is predetermined to match the identification code of the tubular member (12) in which the downhole tool (32) becomes locked upon actuation.

23. The method of claim 22, wherein the downhole tool (32) adjusts in size to fit the inner diameter of the tubular member.

24. The method of claim 1, wherein the first downhole structure (12) comprises a tubular member (100) having an axial bore therethrough, the bore having a generally circular inner diameter which is defined by the inner surface of the tubular member, and wherein the tubular comprises a plurality of RF identification transmitter units (106a to 106h) spaced about its inner diameter; wherein each RF identification transmitter transmits a signal corresponding to a different identification code; and wherein the identification codes are used to determine the orientation of one of the first downhole structure (12) and second downhole structure (108).

25. The method of claim 1, wherein the first downhole structure comprises a movable sleeve or valve closure member (130) which has a first position and a second position; wherein the movable sleeve or valve closure member exposes a first RF identification transmitter unit (140) and occludes a second RF identification transmitter unit (142) when the movable sleeve or valve closure member is in the first position; and wherein the movable sleeve or valve closure member (130) occludes the first RF identification transmitter unit (140) and exposes the second RF identification transmitter unit (142) when the movable sleeve or valve closure member is in the second position.

26. The method of claim 25, wherein the first RF identification transmitter unit (140) transmits a signal corresponding to a identification code that is different than the signal and code for the second RF identification transmitter unit (142), and the determined identification code is used to determine whether a valve closure member (130) is in the open or closed position.

27. The method of claim 25, wherein the first identification transmitter unit (140) transmits a signal corresponding to a identification code that is different than the signal and code for the second RF identification transmitter unit (142), and the determined identification code is used to determine whether a movable sleeve (130) is in the up or down position.

28. The method of claim 1, wherein the first downhole structure is a downhole tool (150) that comprises a fishing neck (152), and wherein the RF identification transmitter unit (154) is secured to the fishing neck; and wherein the second downhole structure is a fishing tool (160) having secured thereto the RF receiver unit (162).

29. The method of claim 27, wherein the determined identification code is used to determine when the fishing tool (160) is in physical proximity to the fishing neck (152).

30. A downhole assembly comprising a first downhole structure (12) that comprises an RF identification transmitter (28) unit that stores an identification code and transmits a signal corresponding to the identification code, and a second downhole structure (32) that comprises an RF receiver unit (34) that can receive the signal transmitted by the identification transmitter unit, and decode the signal to determine the identification code corresponding thereto, and compare the identification code to a preset target identification code, one of the first downhole structure and the second downhole structure being secured at a given location in a subterranean wellbore, and the other being movable in the wellbore; the assembly being **characterized by** apparatus for determining if the determined identification code matches a target identification code, and for actuating or installing one of the first downhole structure (12) or second downhole structure (32) in physical proximity to the other.

31. The assembly of claim 30, wherein the first downhole structure comprises a tubular member (12) having a hollow axial bore (14) therethrough and the RF identification transmitter unit (28) secured thereto.

32. The assembly of claim 31, wherein the identification transmitter unit (28) is imbedded in the tubular member (12).

## Patentansprüche

1. Verfahren zum Betreiben oder Installieren eines Bohrgeräts in einem Bohrloch, wobei das Verfahren die folgenden Schritte umfasst:
Vorsehen einer ersten Bohrlochstruktur (12), die eine HF-Kennungssendereinheit (28) umfasst, die einen Kennungscode speichert und ein dem Kennungscode entsprechendes HF-Signal sendet, und einer zweiten Bohrlochstruktur (32), die eine HF-Empfängereinheit (34) umfasst, die das von der Kennungssendereinheit gesendete Signal empfangen und decodieren kann, um den ihm entsprechenden Kennungscode zu bestimmen, wobei entweder die erste Bohrlochstruktur (12) oder die zweite Bohrlochstruktur (32) an einem gegebenen Ort in einem unterirdischen Bohrloch fixiert ist und die andere in dem Bohrloch beweglich ist; und
Anordnen der ersten und der zweiten Bohrlochstruktur (12, 32) ausreichend nahe beieinander, so dass die HF-Empfängereinheit (34) das von der HF-Kennungssendereinheit (28) gesendete HF-Signal empfangen kann; wobei das Verfahren **gekennzeichnet ist durch**:
Vergleichen des **durch** die HF-Empfängereinheit (34) bestimmten Kennungscodes mit einem Soll-Kennungscode; und
falls der bestimmte Kennungscode mit dem Soll-Kennungscode übereinstimmt, Betreiben oder Installieren entweder der ersten Bohrlochstruktur (12) oder der zweiten Bohrlochstruktur (32) in physikalischer Nähe zu der jeweils anderen.

2. Verfahren nach Anspruch 1, bei dem die erste Bohrlochstruktur (12) ein röhrenförmiges Element umfasst, durch das eine axiale Hohlbohrung (14) verläuft und an dem die HF-Kennungssendereinheit (28) befestigt ist.

3. Verfahren nach Anspruch 2, bei dem die Kennungssendereinheit (28) in das röhrenförmige Element (14) eingebettet ist.

4. Verfahren nach Anspruch 1, bei dem die erste Bohrlochstruktur (12) aus der Gruppe ausgewählt ist, die aus Aufsetzmitteln, Gashebedornen, Dichtungen, Verrohrungen, äußeren Verrohrungsdichtungen, geschlitzten Futterrohren, Mehrfachverzweigungen, Gleitern, Hülsen und Kanonen besteht.

5. Verfahren nach Anspruch 1, bei dem mehrere erste Bohrlochstrukturen (54, 56) in einem unterirdischen Bohrloch auf unterschiedlichen Tiefen befestigt sind.

6. Verfahren nach Anspruch 1, bei dem wenigstens eine erste Bohrlochstruktur (z. B. 84) an einem gegebenen Ort in einem Seitenzweigbohrloch (z. B. 72) eines Mehrfachseitenzweig-Bohrlochs befestigt ist und die zweite Bohrlochstruktur in der Nähe der ersten Bohrlochstruktur in demselben Seitenzweig angeordnet ist.

7. Verfahren nach Anspruch 1, bei dem wenigstens eine erste Bohrlochstruktur (z. B. 84) an einem gegebenen Ort in einem ersten Seitenzweigbohrloch (z. B. 72) eines Mehrfachseitenzweig-Bohrlochs befestigt ist und wenigstens eine andere erste Bohrlochstruktur (z. B. 86) an einem Ort in einem zweiten Seitenzweigbohrloch (z. B. 74) des Bohrlochs befestigt ist.

8. Verfahren nach Anspruch 7, bei dem jede der ersten Bohrlochstrukturen (84, 86, 88) ein röhrenförmiges Element umfasst, durch das eine axiale Hohlbohrung verläuft und an dem die Kennungssendereinheit (90, 92, 94) befestigt ist.

9. Verfahren nach Anspruch 8, bei dem der Kennungscode jeder ersten Bohrlochstruktur (84, 86, 88) verwendet wird, um festzustellen, in welchem seitlichen Bohrloch in dem Mehrfachseitenzweig-Bohrloch sich die zweite Bohrlochstruktur befindet.

10. Verfahren nach Anspruch 1, bei dem die zweite Bohrlochstruktur ausgewählt ist aus der Gruppe, die aus unterirdischen Sicherheitsventilen, Gashebeventilen, Dichtungen, Perforationskanonen, ausdehnbaren Rohrstücken, ausdehnbaren Sieben und Durchflusssteuervorrichtungen besteht.

11. Verfahren nach Anspruch 1, bei dem sich mehrere erste Bohrlochstrukturen (124) in einem Bohrloch auf unterschiedlichen Tiefen befinden, wobei jede der ersten Bohrlochstrukturen ein röhrenförmiges Element umfasst, durch das eine axiale Hohlbohrung verläuft und an dem die HF-Kennungssendereinheit (128) befestigt ist, wobei der bestimmte Kennungscode verwendet wird, um die Tiefe der zweiten Bohrlochstruktur in dem Bohrloch zu bestimmen.

12. Verfahren nach Anspruch 11, bei dem die mehreren röhrenförmigen Elemente (124) Verbindungen von Verrohrungsrohrstücken sind, die Ende an Ende befestigt sind.

13. Verfahren nach Anspruch 12, bei dem jeder Kennungssender (128) in der Nähe eines Endes der entsprechenden Verbindung des Verrohrungsrohrstücks befestigt ist.

14. Verfahren nach Anspruch 11, bei dem die zweite Bohrlochstruktur eine Perforationskanone (210) ist und die bestimmte Tiefe verwendet wird, um festzustellen, wann die Kanone feuern soll.

15. Verfahren nach Anspruch 1, bei dem sich mehrere zweite Bohrlochstrukturen in einem Bohrloch befinden, wobei jede zweite Bohrlochstruktur eine Perforation umfasst und an jeder zweiten Bohrlochstruktur eine HF-Kennungssendereinheit befestigt ist.

16. Verfahren nach Anspruch 1, bei dem die zweite Bohrlochstruktur eine Perforation in einem Bohrloch umfasst und die HF-Kennungssendereinheit darin befestigt ist.

17. Verfahren nach Anspruch 1, bei dem sich mehrere zweite Bohrlochstrukturen in einer Formation befinden, wobei jede zweite Bohrlochstruktur eine Bruchstelle umfasst und darin der HF-Kennungssender vorhanden ist.

18. Verfahren nach Anspruch 1, bei dem die zweite Bohrlochstruktur (32) ein Bohrlochwerkzeug ist, das an einer Unterstützungsstruktur (40) befestigt ist, die aus der Gruppe ausgewählt ist, die aus einer Drahtleitung, einer Schlickleitung, einem gewendelten Rohrstück und einem Bohrgestänge besteht, und bei dem die zweite Bohrlochstruktur durch Anheben oder Absenken der Unterstützungsstruktur zu unterschiedlichen Tiefen in dem Bohrloch bewegt wird.

19. Verfahren nach Anspruch 1, bei dem die HF-Kennungssendereinheit (28) einen Hochfrequenz-Transponder umfasst.

20. Verfahren nach Anspruch 1, bei dem die zweite Bohrlochstruktur (32) ein Bohrlochwerkzeug ist, das in Reaktion auf eine Übereinstimmung zwischen dem bestimmten Kennungscode und dem Soll-Kennungscode betrieben wird, und bei dem der Betrieb das Verriegeln der zweiten Bohrlochstruktur (32) an einer festen Position in Bezug auf die erste Bohrlochstruktur (12) umfasst.

21. Verfahren nach Anspruch 20, bei dem die erste Bohrlochstruktur (12) ein röhrenförmiges Element umfasst, durch das eine axiale Bohrung (14) verläuft und das eine innere Oberfläche sowie eine Verriegelungsvertiefung (38) in der inneren Oberfläche aufweist, und bei dem die zweite Bohrlochstruktur mit der Verriegelungsvertiefung in Eingriff gelangt, wenn sie betrieben wird.

22. Verfahren nach Anspruch 21, bei dem der Kennungscode den Innendurchmesser des röhrenförmigen Elements (12) angibt und der Soll-Kennungscode so vorgegeben ist, dass er mit dem Kennungscode des röhrenförmigen Elements (12), in dem das Bohrlochwerkzeug (32) während seines Betriebs verriegelt wird, übereinstimmt.

23. Verfahren nach Anspruch 22, bei dem die Größe des Bohrlochwerkzeugs (32) so eingestellt wird, dass es in den Innendurchmesser des röhrenförmigen Elements passt.

24. Verfahren nach Anspruch 1, bei dem die erste Bohrlochstruktur (12) ein röhrenförmiges Element (100) umfasst, durch das eine axiale Bohrung verläuft, die einen im Allgemeinen kreisförmigen Innendurchmesser besitzt, der durch die innere Oberfläche des röhrenförmigen Elements definiert ist, und bei dem das röhrenförmige Element mehrere HF-Kennungssendereinheiten (106a bis 106h) umfasst, die längs seines inneren Durchmessers in gegenseitigem Abstand angeordnet sind; wobei jeder HF-Kennungssender ein einem anderen Kennungscode entsprechendes Signal sendet; und bei dem die Kennungscodes dazu verwendet werden, die Orientierung entweder der ersten Bohrlochstruktur (12) oder der zweiten Bohrlochstruktur (108) zu bestimmen.

25. Verfahren nach Anspruch 1, bei dem die erste Bohrlochstruktur eine bewegliche Hülse oder ein Ventilschließelement (130) umfasst, die bzw. das eine erste Position und eine zweite Position besitzt; wobei die bewegliche Hülse oder das Ventilschließelement eine erste HF-Kennungssendereinheit (140) freilegt und eine zweite HF-Kennungssendereinheit (142) verbirgt, wenn sich die bewegliche Hülse oder das Ventilschließelement in der ersten Position befindet; und bei dem die bewegliche Hülse oder das Ventilschließelement (130) die erste HF-Kennungssendereinheit (140) verbirgt und die zweite HF-Kennungssendereinheit (142) freilegt, wenn sich die bewegliche Hülse oder das Ventilschließelement in der zweiten Position befindet.

26. Verfahren nach Anspruch 25, bei dem die erste HF-Kennungssendereinheit (140) ein Signal sendet, das einem Kennungscode entspricht, der von dem Signal bzw. dem Code für die zweite HF-Kennungssendereinheit (142) verschieden ist, wobei der bestimmte Kennungscode verwendet wird, um festzustellen, ob sich das Ventilschließelement (130) in der geöffneten oder in der geschlossenen Position befindet.

27. Verfahren nach Anspruch 25, bei dem die erste Kennungssendereinheit (140) ein Signal, das einem Kennungscode entspricht, der von dem Signal bzw. von dem Code für die zweite HF-Kennungssendereinheit (142) verschieden ist, sendet und der bestimmte Kennungscode verwendet wird, um festzustellen, ob sich eine bewegliche Hülse (130) in der oberen oder in der unteren Position befindet.

28. Verfahren nach Anspruch 1, bei dem die erste Bohrlochstruktur ein Bohrlochwerkzeug (150) ist, das einen Fanghals (152) umfasst, und bei dem die HF-Kennungssendereinheit (154) an dem Fanghals befestigt ist; und bei dem die zweite Bohrlochstruktur ein Fangwerkzeug (160) ist, an dem die HF-Empfängereinheit (162) befestigt ist.

29. Verfahren nach Anspruch 27, bei dem der bestimmte Kennungscode verwendet wird, um festzustellen, wenn sich das Fangwerkzeug (160) in physikalischer Nähe des Fanghalses (152) befindet.

30. Bohrlochbaueinheit, die eine erste Bohrlochstruktur (12), die eine HF-Kennungssendereinheit (28) aufweist, die einen Kennungscode speichert und ein dem Kennungscode entsprechendes Signal sendet, und eine zweite Bohrlochstruktur (32), die eine HF-Empfängereinheit (34) aufweist, die das von der Kennungssendereinheit gesendete Signal empfangen und decodieren kann, um den ihm entsprechenden Kennungscode zu bestimmen, und den Kennungscode mit einem im Voraus festgelegten Soll-Kennungscode vergleichen kann, umfasst, wobei entweder die erste Bohrlochstruktur oder die zweite Bohrlochstruktur an einem gegebenen Ort in einem unterirdischen Bohrloch befestigt ist und die andere in dem Bohrloch beweglich ist; wobei die Baueinheit **gekennzeichnet ist durch** eine Vorrichtung, die bestimmt, ob der bestimmte Kennungscode mit einem Soll-Kennungscode übereinstimmt, und die entweder die erste Bohrlochstruktur (12) oder die zweite Bohrlochstruktur (32) in physikalischer Nähe zu der jeweils anderen betreibt oder installiert.

31. Baueinheit nach Anspruch 30, bei der die erste Bohrlochstruktur ein röhrenförmiges Element (12) umfasst, durch das eine axiale Hohlbohrung (14) verläuft und an dem die HF-Kennungssendereinheit (28) befestigt ist.

32. Baueinheit nach Anspruch 31, bei der die Kennungssendereinheit (28) in das röhrenförmige Element (12) eingebettet ist.

## Revendications

1. Procédé d'actionnement ou d'installation d'équipement de fond de puits dans un puits de forage, le procédé comprenant les étapes consistant à :
équiper une première structure de fond de puits (12) qui comprend un bloc émetteur d'identification RF (28) qui mémorise un code d'identification et transmet un signal RF correspondant au code d'identification, et une seconde structure de fond de puits (32) qui comprend un bloc récepteur RF (34) qui peut recevoir le signal transmis par le bloc émetteur d'identification, décoder le signal pour déterminer le code d'identification y correspondant, l'une parmi la première structure de fond de puits (12) et la seconde structure de fond de puits (32) étant fixée en un emplacement donné dans un puits de forage souterrain, et l'autre étant mobile dans le puits de forage ; et
placer les première et seconde structures de fond de puits (12, 32) de façon suffisamment proche afin que le bloc récepteur RF (34) puisse recevoir le signal RF transmis par le bloc émetteur d'identification RF (28) ; le procédé étant **caractérisé par** :
la comparaison du code d'identification déterminé par le bloc récepteur RF (34) à un code d'identification cible ; et
si le code d'identification déterminé correspond au code d'identification cible, l'actionnement ou l'installation de l'une parmi la première structure de fond de puits (12) et la seconde structure de fond de puits (32) à proximité physique l'une de l'autre.

2. Procédé selon la revendication 1, dans lequel la première structure de fond de puits (12) comprend un élément tubulaire ayant un alésage axial creux (14) en son travers et le bloc émetteur d'identification RF (28) y est fixé.

3. Procédé selon la revendication 2, dans lequel le bloc émetteur d'identification (28) est intégré dans l'élément tubulaire (14).

4. Procédé selon la revendication 1, dans lequel la première structure de fond de puits (12) est choisie dans le groupe constitué de raccords à portée intérieure, de mandrins de gas-lift, de garnitures d'étanchéité, de tubage, de garnitures étanches externes de tubage, de colonnes perdues à fentes, de dérivations de conduite multiples, de coins de retenue, de manchons, et de perforateurs.

5. Procédé selon la revendication 1, dans lequel une pluralité de premières structures de fond de puits (54, 56) sont fixées à des profondeurs différentes dans un puits de forage souterrain.

6. Procédé selon la revendication 1, dans lequel au moins une première structure de fond de puits (par ex. 84) est fixée en un emplacement donné dans un trou de sonde latéral (par ex. 72) d'un puits multilatéral et la seconde structure de fond de puits est placée à proximité de la première structure de fond de puits à l'intérieur de la même dérivation de conduite.

7. Procédé selon la revendication 1, dans lequel au moins une première structure de fond de puits (par ex. 84) est fixée en un emplacement donné dans un premier trou de sonde latéral (par ex. 72) d'un puits multilatéral, et au moins une autre première structure de fond de puits (par ex. 86) est fixée en un emplacement dans un second trou de sonde latéral (par ex. 74) du puits.

8. Procédé selon la revendication 7, dans lequel chacune des premières structures de fond de puits (84, 86, 88) comprend un élément tubulaire ayant un alésage axial creux en son travers, et le bloc émetteur d'identification (90, 92, 94) est fixé à l'élément tubulaire.

9. Procédé selon la revendication 8, dans lequel le code d'identification de chaque première structure de fond de puits (84, 86, 88) est utilisé pour déterminer dans quel trou de sonde latéral dans le puits multilatéral est située la seconde structure de fond de puits.

10. Procédé selon la revendication 1, dans lequel la seconde structure de fond de puits est choisie dans le groupe constitué de soupapes de sûreté de subsurface, de soupapes de gas-lift, de garnitures d'étanchéité, de perforateurs de tubage, de colonnes de production extensibles, de filtres extensibles, et de dispositifs de réglage du débit.

11. Procédé selon la revendication 1, dans lequel une pluralité de premières structures de fond de puits (124) sont situées à des profondeurs différentes dans un puits de forage, chacune des premières structures de fond de puits comprend un élément tubulaire ayant un alésage axial creux en son travers et le bloc émetteur d'identification RF (128) y est fixé, et le code d'identification déterminé est utilisé pour déterminer la profondeur de la seconde structure de fond de puits dans le trou de sonde.

12. Procédé selon la revendication 11, dans lequel la pluralité d'éléments tubulaires (124) consiste en des raccords de colonne de production de complétion qui sont attachés bout à bout.

13. Procédé selon la revendication 12, dans lequel chaque émetteur d'identification (128) est fixé près d'une extrémité du raccord respectif de colonne de production de complétion.

14. Procédé selon la revendication 11, dans lequel la seconde structure de fond de puits est un perforateur de tubage (210), et la profondeur déterminée est utilisée pour déterminer quand démarrer le perforateur.

15. Procédé selon la revendication 1, dans lequel une pluralité de secondes structures de fond de puits est située dans un puits de forage, chacune des secondes structures de fond de puits comprend une perforation et le bloc émetteur d'identification RF y est fixé.

16. Procédé selon la revendication 1, dans lequel la seconde structure de fond de puits comprend une perforation dans un puits de forage et le bloc émetteur d'identification RF y est fixé.

17. Procédé selon la revendication 1, dans lequel une pluralité de secondes structures de fond de puits est située dans une formation, chacune des secondes structures de fond de puits comprend une fissure et le bloc émetteur d'identification RF y est présent.

18. Procédé selon la revendication 1, dans lequel la seconde structure de fond de puits (32) est un outil de fond de puits qui est attaché à une structure de soutènement (40) choisie dans le groupe constitué d'un câble de forage, d'un câble lisse, d'une colonne de production en spirale, et d'une tige de forage, et la seconde structure de fond de puits est déplacée à différentes profondeurs à l'intérieur du trou de sonde en soulevant ou en abaissant la structure de soutènement.

19. Procédé selon la revendication 1, dans lequel le bloc émetteur d'identification RF (28) comprend un transpondeur à fréquence radio.

20. Procédé selon la revendication 1, dans lequel la seconde structure de fond de puits (32) est un outil de fond de puits qui est actionné en réponse à une correspondance entre le code d'identification déterminé et le code d'identification cible, et dans lequel l'actionnement comprend le verrouillage de la seconde structure de fond de puits (32) dans une position fixe par rapport à la première structure de fond de puits (12).

21. Procédé selon la revendication 20, dans lequel la première structure de fond de puits (12) comprend un élément tubulaire ayant un alésage axial (14) en son travers et une surface intérieure, et comprenant en outre une indentation de verrouillage (38) dans la surface intérieure, et dans lequel la seconde structure de fond de puits met en prise l'indentation de verrouillage quand elle est actionnée.

22. Procédé selon la revendication 21, dans lequel le code d'identification indique le diamètre intérieur de l'élément tubulaire (12), et le code d'identification cible est prédéterminé pour correspondre au code d'identification de l'élément tubulaire (12) dans lequel l'outil de fond de puits (32) se verrouille sur actionnement.

23. Procédé selon la revendication 22, dans lequel l'outil de fond de puits (32) s'ajuste en taille pour correspondre au diamètre intérieur de l'élément tubulaire.

24. Procédé selon la revendication 1, dans lequel la première structure de fond de puits (12) comprend un élément tubulaire (100) ayant un alésage axial en son travers, l'alésage ayant un diamètre intérieur généralement circulaire qui est défini par la surface intérieure de l'élément tubulaire, et dans lequel l'élément tubulaire comprend une pluralité de blocs émetteurs d'identification RF (106a à 106h) espacés autour de son diamètre intérieur ; dans lequel chaque émetteur d'identification RF transmet un signal correspondant à un code d'identification différent ; et dans lequel les codes d'identification sont utilisés pour déterminer l'orientation d'une parmi la première structure de fond de puits (12) et la seconde structure de fond de puits (108).

25. Procédé selon la revendication 1, dans lequel la première structure de fond de puits comprend un manchon mobile ou un élément de fermeture de soupape (130) qui a une première position et une seconde position ; dans lequel le manchon mobile ou l'élément de fermeture de soupape ouvre un premier bloc émetteur d'identification RF (140) et ferme un second bloc émetteur d'identification RF (142) quand le manchon mobile ou l'élément de fermeture de soupape est dans la première position ; et dans lequel le manchon mobile ou l'élément de fermeture de soupape (130) ferme le premier bloc émetteur d'identification RF (140) et ouvre le second bloc émetteur d'identification RF (142) quand le manchon mobile ou l'élément de fermeture de soupape est dans la seconde position.

26. Procédé selon la revendication 25, dans lequel le premier bloc émetteur d'identification RF (140) transmet un signal correspondant à un code d'identification qui est différent du signal et du code pour le second bloc émetteur d'identification RF (142), et le code d'identification déterminé est utilisé pour déterminer si un élément de fermeture de soupape (130) est dans la position ouverte ou fermée.

27. Procédé selon la revendication 25, dans lequel le premier bloc émetteur d'identification RF (140) transmet un signal correspondant à un code d'identification qui est différent du signal et du code pour le second bloc émetteur d'identification RF (142), et le code d'identification déterminé est utilisé pour déterminer si un manchon mobile (130) est dans la position haute ou basse.

28. Procédé selon la revendication 1, dans lequel la première structure de fond de puits est un outil de fond de puits (150) qui comprend un collier de repêchage (152), et dans lequel le bloc émetteur d'identification RF (154) est fixé au collier de repêchage ; et dans lequel la seconde structure de fond de puits est un outil de repêchage (160) ayant le bloc récepteur RF (162) fixé à celui-ci.

29. Procédé selon la revendication 27, dans lequel le code d'identification déterminé est utilisé pour déterminer quand l'outil de repêchage (160) est à proximité physique du collier de repêchage (152).

30. Assemblage de fond de puits comprenant une première structure de fond de puits (12) qui comprend un bloc émetteur d'identification RF (28) qui mémorise un code d'identification et transmet un signal correspondant au code d'identification, et une seconde structure de fond de puits (32) qui comprend un bloc récepteur RF (34) qui peut recevoir le signal transmis par le bloc émetteur d'identification, et décoder le signal pour déterminer le code d'identification y correspondant, et comparer le code d'identification à un code d'identification, cible prédéfini, l'une parmi la première structure de fond de puits et la seconde structure de fond de puits étant fixée en un emplacement donné dans un puits de forage souterrain, et l'autre étant mobile dans le puits de forage ; l'assemblage étant **caractérisé par** un appareil pour déterminer si le code d'identification déterminé correspond au code d'identification cible, et pour actionner ou installer l'une parmi la première structure de fond de puits (12) et la seconde structure de fond de puits (32) à proximité physique l'une de l'autre.

31. Assemblage selon la revendication 30, dans lequel la première structure de fond de puits comprend un élément tubulaire (12) ayant un alésage axial creux (14) en son travers et le bloc émetteur d'identification RF (28) y est fixé.

32. Assemblage selon la revendication 31, dans lequel le bloc émetteur d'identification (28) est intégré dans l'élément tubulaire (12).
